# EUROPÄISCHE PATENTSCHRIFT

(11) **EP 1 423 477 B1**
(45) Veröffentlichungstag und Bekanntmachung des Hinweises auf die Patenterteilung: **21.09.2005**
(21) Anmeldenummer: 02758422.6
(22) Anmeldetag: 01.08.2002
(51) Int. Cl.: C09B 29/00, C09B 67/00

(54) **FARBMITTELZUSAMMENSETZUNG UND DEREN VERWENDUNG ZUR EINFÄRBUNG VON PULVERLACKEN**
DYE COMPOSITION AND THE USE OF THE SAME FOR DYEING POWDER COATINGS
COMPOSITION COLORANTE ET SON UTILISATION POUR LA COLORATION DE PEINTURES EN POUDRE

(30) Priorität: 30.08.2001 DE 10142382
(43) Veröffentlichungstag der Anmeldung: 02.06.2004
(73) Patentinhaber: Clariant GmbH, 65929 Frankfurt am Main (DE)
(72) Erfinder: GRIMM, Felix, W., 65719 Hofheim (DE); KUND, Klaus, 65558 Langenscheid (DE); WINTER, Wolfgang, 65760 Eschborn (DE); RAUSCHMANN, Willi, 65931 Frankfurt am Main (DE); NESTLER, Bernd, Clariant (Japan) K.K., Ogasa-gun, Shizuoka Pref. 437-1496 (JP)
(74) Vertreter: Hütter, Klaus
(86) Internationale Anmeldenummer: PCT/EP2002/008580
(87) Internationale Veröffentlichungsnummer: WO 2003/020831

(56) Entgegenhaltungen:
- DE-A- 1 923 256
- DE-A- 3 718 277
- GB-A- 946 053
- US-A- 5 989 129
- US-A- 6 063 182

## Beschreibung

Die Erfindung betrifft eine anorganisch-organische Farbmittelzusammensetzung aus Bariumsulfat und C.I. Pigment Rot 170, sowie deren Verwendung zum Einfärben von Pulverlacken.

Die Herstellung von Pulverlacken ist bekannt und besteht im wesentlichen wie in Farbe und Lack, 1986, 92, 734-737 beschrieben, aus drei Verfahrensschritten. Zunächst werden die Bestandteile des Pulverlackes wie z.B. Bindemittel, Härter, Farbmittel und Füllstoffe sowie gegebenenfalls Hilfs- und Zusatzstoffe wie beispielsweise Tenside, pigmentäre und nichtpigmentäre Dispergiermittel, Stellmittel, Harze, Wachse, Entschäumer, Antistaubmittel, Extender, Konservierungsmittel, Additive zur Steuerung der Rheologie, Netzmittel, Antioxidantien, UV-Absorber, Lichtstabilisatoren, Antistatika, Entgasungsmittel, Gleitmittel oder eine Kombination davon, dem Rezept des Pulverlackes entsprechend abgewogen, in einen Vormischer dosiert und sorgfältig gemischt. In einem zweiten Schritt wird die Vormischung kontinuierlich einem Extruder zugeführt, aufgeschmolzen, homogenisiert und die festen Bestandteile durch Scherung dispergiert. Im letzten Schritt wird die Schmelze nach Austritt aus dem Extruder schnell abgekühlt, um die Reaktion zwischen Bindemittel und Härter abzustoppen bzw. zu vermeiden. Das Extrudat wird anschließend auf die gewünschte Komgrößenverteilung des Pulverlackes vermahlen.
Dieses bekannte und weithin angewandte Verfahren weist insbesondere in den ersten beiden Prozessschritten Nachteile auf. So treten sowohl bei der Vormischung als auch bei der Homogenisierung im Extruder häufig Inhomogenitäten der Mischung sowie Anbackungen auf. Dies resultiert in Qualitätsschwankungen und Inhomogenitäten des fertigen Pulverlackes. Nachteilig ist auch der erhöhte Verschleiß des Vormischers und des Extruders aufgrund höherer mechanischer Belastung durch derartige Inhomogenitäten und Agglomerationen. Ebenso besteht ein großer Nachteil im teilweisen Verlust der eingesetzten Rohmaterialien. Weiterhin wird als Nachteil der erhöhte Reinigungsaufwand angesehen.
Um die genannten Nachteile zu überwinden, werden teilweise für den ersten Verfahrensschritt, d.h. das Vormischen der einzelnen Bestandteile des Pulverlackes, teilweise für den zweiten Verfahrenschritt, also das Schmelzen, Homogenisieren und Dispergieren im Extruder, modifizierte Verfahren angewandt. Einige Verfahren zeichnen sich durch eine Modifikation beider Verfahrensschritte aus, um die Pulverlackherstellung zu optimieren.
So beschreibt beispielsweise DE-A-4 101 048 ein modifiziertes Verfahren zur Herstellung eines Pulverlackes, bei dem die Bindemittel- und die Härterkomponente vorgemischt, dem Extruder kontinuierlich zugeführt und in dem Extruder aufgeschmolzen werden. Pigmente, Füllstoffe und weitere Bestandteile werden separat vorgemischt und dem Extruder am Ende der Schmelzzone oder in der anschließenden Homogenisierungs- bzw. Dispergierungszone zudosiert. Nachteilig für den Hersteller von Pulverlacken ist bei diesem Verfahren, dass ein zweiter Vormischer benötigt wird und gleichsam ein weiterer Verfahrenschritt implementiert wird, der Kosten durch zusätzlichen Raum-, Zeit- und Investitionsbedarf verursacht. Ein weiterer Nachteil des zitierten Verfahrens besteht darin, dass auch beim separaten Vormischen von Pigment, Füllstoffen und gegebenenfalls weiteren Bestandteilen Inhomogenitäten und Anbackungen auftreten können.

Aus US 3,790,513 ist ein Verfahren bekannt, alle Bestandteile des Pulverlackes in einem organischen Lösemittel zu dispergieren und diese Mischung einem Vakuumextruder zuzuführen. Durch Wärmezufuhr und Anlegen eines Vakuums wird zunächst das organische Lösemittel verdampft und anschließend die Mischung durch Schmelzextrusion homogenisiert und dispergiert. Nachteilig bei diesem Verfahren ist die kostenintensive Verdampfung des organischen Lösemittels sowie der zusätzliche technische Aufwand, den diese Verfahrenweise erfordert.

US 4,320,048 beschreibt ein Verfahren, bei dem alle Komponenten des Pulverlackes bis auf das Farbmittel vorgemischt und dem Extruder zugeführt werden. Das Farbmittel wird getrennt davon in Form einer Dispersion, die bis zu 60 Gew.-% eines organischen Lösemittels enthält, in den Extruder gespeist und mit den anderen Komponenten gemischt. Zwar wird bei diesem Verfahren eine prozentual geringere Lösemittelmenge bezüglich des fertigen Pulverlackes benötigt als in US 3,790,513 beschrieben, doch nachteilig wirkt sich auch hier das erforderliche Entfernen des Lösemittels aus der Pulverlackmischung aus.

In WO 91/13931 wird ein Verfahren für die Herstellung von Pigmentkonzentraten (Master) und deren Eignung zum Einfärben von Pulverlacken beschrieben. Der Master wird aus einer Mischung von Farbmittel(n), ggf. Füllstoff(en), Netzmittel(n), Polymerträger(n) und eventuell weiteren Additiv(en) in einem "adiabatischen" Schnellmischer hergestellt, wobei die Masse durch die erzeugte Reibungswärme aufgeschmolzen, homogenisiert und dispergiert wird. Derartige Master lassen sich als Farbmittel zur Herstellung von Pulverlacken verwenden, wobei eine verbesserte Homogenität des Pulverlackes, eine höhere Farbstärke sowie ein verbesserter Verlauf und Glanz beobachtet werden, als bei der herkömmlichen Einarbeitung des Farbmittels. Von Nachteil ist hierbei, dass ein zusätzlicher Verfahrensschritt und zwar die Herstellung des Masters in einem zusätzlichen Aggregat, einem speziellen Schnellmischer notwendig ist. Dies wirkt sich nachteilig auf den Zeitbedarf und die Kosten der Pulverlackherstellung aus. Des weiteren ist von Nachteil, dass eine solche Farbmittelpräparation eine Vielzahl von Zusatzstoffen enthält, deren Einfluss auf die Lacksysteme des Pulverlackherstellers nicht vorhersehbar ist.

Anorganisch-organische Farbmittelzusammensetzungen sind z.B. aus der EP 0 702 055, der EP 0 702 063 und der EP 0 845 504 bekannt. Die dort beschriebenen Pigmentpräparationen mit natürlichen und synthetischen Silikaten als anorganischem Füllmaterial werden zwar als "stir-in" Pigmente bezeichnet, erfüllen jedoch nicht die bereits beschriebenen Anforderungen hinsichtlich der Vormischung bei der Einarbeitung in Pulverlacksysteme. Als Beispiele natürlicher und synthetischer Silikate werden Glimmer, Kaolin und Talk genannt.

Pigment Rot 170 (C.I. 12475) ist eines der wichtigsten Farbmittel zum Pigmentieren von Pulverlacken im neutralen Rotbereich. Neben seiner guten Hitzebeständigkeit zeichnet es sich vor allem durch eine ausgezeichnete Ausblühechtheit in Pulverlacksystemen aus. Aufgrund ihrer Tendenz zum Ausblühen sind z.B. das gelbstichigere Pigment Rot 112 (C.I. 12370) nur bedingt und Pigment Rot 3 (C.I. 12120) überhaupt nicht für dieses Anwendungsgebiet geeignet. Andere Pigmente, die ebenso dem Pigment Rot 170 koloristisch ähnlich sind, eignen sich wegen anderer wichtiger anwendungstechnischer Eigenschaften, wie beispielsweise mangelnde Echtheiten in der Außenanwendung, mangelnder Deckkraft oder ungenügender Farbstärke nicht, dieses Pigment in Pulverlacksystemen ohne Einschränkung zu ersetzen.

Aus der Praxis ist jedoch bekannt, dass gerade bei Pigment Rot 170 in starkem Maße Inhomogenitäten und Anbackungen beim Einarbeiten in Pulverlacksysteme, insbesondere bei der Herstellung der Vormischung, auftreten.

Der vorliegenden Erfindung liegt somit die Aufgabe zugrunde, ein Material zur Verfügung zu stellen, welches im wesentlichen Pigment Rot 170 enthält und welches ohne Inhomogenitäten und Anbackungen zu verursachen, durch einfaches Vermischen in einem Vormischer in Pulverlacksysteme eingearbeitet werden kann. Eine weitere Aufgabe der Erfindung besteht darin, dieses Material möglichst kostengünstig zur Verfügung zu stellen, d.h. ohne zusätzliche Verfahrensschritte im Vergleich zu herkömmlichen Pigmentpulvem. Weiterhin sollte das Material den mit einem Farbtonwechsel verbundenen Reinigungsaufwand des Vormischers sowie den Verschleiß desselben minimieren.

Es wurde nun gefunden, dass diese Aufgabe überraschenderweise durch eine bestimmte Additivierung von Pigment Rot 170 mit Bariumsulfat gelöst werden konnte.

Gegenstand der vorliegenden Erfindung ist, eine pulverförmige Farbmittelzusammensetzung, bestehend im wesentlichen aus C.I. Pigment Rot 170 (C.I. No. 12475) und Bariumsulfat, welches vor oder während des Herstellungsprozesses von C.I. Pigment Rot 170 zugegeben wurde.

Die Additivierung erfolgt während eines beliebigen, bei der Pigmentherstellung zu durchlaufenden Prozessschrittes und liefert dadurch eine Pigmentpräparation, welche sich im Unterschied zu einer Trockenmischung des fertigen Pigments mit Bariumsulfat problemlos und ohne Einführung weiterer Prozessschritte direkt in Pulverlacksysteme einarbeiten lässt. Der Herstellungsprozess des Pigmentes umfasst üblicherweise dessen Synthese, d.h. Diazotierung von 4-Carbamoyl-anilin und Kupplung des Diazoniumsalzes mit 3-Hydroxy-N-(2'-ethoxyphenyl)naphthoesäure-2-amid, die Isolierung als Presskuchen und dessen Reinigung durch Waschen, gegebenenfalls das Anteigen oder Anmaischen des gewaschenen Presskuchens, Finish der resultierenden Suspension durch thermische Behandlung, Isolierung des gefinishten Presskuchens und dessen Reinigung durch Waschen, und gegebenenfalls Granulierung des gefinishten und gewaschenen Presskuchens. Danach erfolgt die Trocknung des Granulates und dessen Mahlung zum Pigmentpulver. Das Bariumsulfat wird spätestens vor diesem Trocknungsschritt zugesetzt. Beispielsweise kann das Bariumsulfat vor oder während der Pigmentsynthese, unmittelbar vor oder während eines anschließenden Finishs zugegeben werden. Selbstverständlich kann das Bariumsulfat auch in Teilportionen zu unterschiedlichen Zeiten zugegeben werden.

Unter Finishprozess versteht der Fachmann eine thermische Nachbehandlung des nach der Synthese angefallenen feuchten Rohpigmentes in einem Finishmedium, z.B. in Wasser, einem organischem Lösungsmittel oder einer Mischung aus Wasser und organischem Lösungsmittel, wobei das Wasser und das organische Lösungsmittel weder bei Raumtemperatur noch bei einer anderen Temperatur miteinander mischbar sein müssen, um eine für die Anwendung spezifische Kristallmodifikation und/oder Kristallform und/oder Komgrößenverteilung zu erzeugen. Dabei können Temperaturen von beispielsweise 0 bis 200°C auftreten.

Die Zugabe des Bariumsulfats erfolgt vorzugsweise unmittelbar vor oder nach dem Finish in wässrigem, wässrig-alkalischem, wässrig-saurem, wässrigorganischem oder organischem Medium. Das Bariumsulfat kann auch dem wasserfeuchten Presskuchen vor der Trocknung zugesetzt und eingearbeitet werden, wobei das Bariumsulfat selbst ebenfalls trocken oder in Form eines wasserfeuchten Presskuchens eingesetzt werden kann.

Die Mengenverhältnisse zwischen dem Pigment und dem Bariumsulfat können in weiten Grenzen schwanken. Zweckmäßigerweise besteht die erfindungsgemäße Farbmittelzusammensetzung aus 60 bis 99 Gew.-%, vorzugsweise aus 70 bis 95 Gew.-% und ganz besonders bevorzugt aus 80 bis 90 Gew.-%, C.I. Pigment Rot 170 und 1 bis 40 Gew.-%, vorzugsweise 5 bis 30 Gew.-% und ganz besonders bevorzugt aus 10 bis 20 Gew.-%, Bariumsulfat.

Die erfindungsgemäße Farbmittelpräparation besitzt zweckmäßigerweise eine, durch Auswertung von transmissionselektronenmikroskopische Aufnahmen bestimmte, unimodale Primärkomgrößenverteilung (D_{50%}) zwischen 0,1 µm und 1,5 µm, bevorzugt zwischen 0,15 µm und 0,40 µm.

Gegenstand der vorliegenden Erfindung ist auch ein Verfahren zur Herstellung der erfindungsgemäßen Farbmittelzusammensetzung, dadurch gekennzeichnet, dass man Bariumsulfat vor oder während des Herstellungsprozesses von C.I. Pigment Rot 170 zugibt und die Mischung homogenisiert.

Um eine ausreichende Vormischung bzw. Vordispergierung des Pigment Rot 170 im Bindemittel des Pulverlacks zu erreichen und um optimale anwendungstechnische Eigenschaften zu erhalten, sollte das Bariumsulfat eine durchschnittliche Korngröße (d₅₀) von 10 bis 0,1 µm aufweisen. Bevorzugt sind Bariumsulfate mit einer durchschnittlichen Komgröße von 5 bis 0,5 µm, besonders bevorzugt mit einer durchschnittlichen Komgröße von 1,5 bis 0,7 µm.

Die erfindungsgemäßen Pigmentzubereitungen zeichnen sich durch hervorragende coloristische und rheologische Eigenschaften aus, insbesondere durch eine hervorragende Rheologie, hohe Transparenz und Helligkeit sowie eine leichte Dispergierbarkeit. Sie sind für den Einsatz in Pulverlacken besonders geeignet, aber auch als Farbmittel für berührungslose Druckverfahren, wie z.B. in elektrophotographischen Tonern und Ink-Jet-Tinten.

Die erfindungsgemäße Pigmentzubereitung kann in jedem Mengenverhältnis, das zum Einfärben von Pulverlacken notwendig ist, eingesetzt werden. Bezüglich des einzufärbenden Materials werden üblicherweise 0,1 bis 30 Gew.-%, bevorzugt 0,5 bis 20 Gew.-% und ganz besonders bevorzugt 1 bis 10 Gew.-% der erfindungsgemäßen Pigmentzubereitung eingesetzt.

Zum Einfärben einer Pulverlackmischung kann die erfindungsgemäße Pigmentpräparation für sich alleine eingesetzt werden. Zur Einstellung verschiedener Farbtöne oder Farbeffekte ist es auch möglich, weitere Farbmittel, wie z.B. weiße, farbige oder schwarze Pigmente, sowie Effektpigmente, der Pulvertackmischung zuzusetzen.

Als Bindemittel für Pulverlacke werden typischerweise Epoxidharze, gegebenenfalls carboxyl- und/oder hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (bevorzugt 3 bis 10 Gew.%, bezogen auf das Harz) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Gegenstand der vorliegenden Erfindung ist auch eine Pulverlack-Zubereitung, enthaltend die erfindungsgemäße Pigmentzubereitung sowie ein übliches Bindemittel.

Bevorzugt sind Pulverlacke, bestehend im wesentlichen aus 0,1 bis 30 Gew.-%, insbesondere 0,5 bis 20 Gew.-%, besonders bevorzugt 1 bis 10 Gew.-%, der erfindungsgemäßen Pigmentzubereitung, 45 bis 80 Gew.-%, insbesondere 50 bis 70 Gew.-%, besonders bevorzugt 55 bis 65 Gew.-%, eines Bindemittels (Härter mit eingerechnet) aus der Gruppe der Epoxidharze, Polyesterharze, Polyurethanharze, Acrylatharze oder einer Kombination dieser Harze, sowie 0 bis 50 Gew.-% weiterer Zusatzstoffe, wie z.B. Farbmittel zum Nuancieren, Tenside, Füllmittel, Ladungssteuermittel zur kontrollierten Einstellung der elektrostatischen Aufladung, Dispergiermittel, Stellmittel, Wachse, Entschäumer, Antistaubmittel, Extender, Konservierungsmittel, Additive zur Steuerung der Rheologie, Netzmittel, Anitoxidantien, UV-Absorber, Lichtstabilisatoren, Antistatika, Gleitmittel oder Entgasungsmittel.

Gegenstand der Erfindung ist auch ein Verfahren zur Herstellung einer Pulverlack-Zubereitung, dadurch gekennzeichnet, dass die erfindungsgemäße Pigmentzubereitung, das Bindemittel und gegebenenfalls die Zusatzstoffe gemischt werden, die Mischung extrudiert und das Extrudat abgekühlt und gemahlen wird.

Die erfindungsgemäßen Pulverlackzubereitungen können triboelektrisch oder elektrokinetisch versprühbare Pulverlacke sein und zur Oberflächenbeschichtung von Gegenständen beispielsweise aus Metall, Holz, Kunststoff, Glas, Keramik, Beton, Textilmaterial, Papier oder Kautschuk zur Anwendung kommen (J.F. Hughes, "Electrostatic Powder Coating" Research Studies, John Wiley & Sons, 1984).

Zur Beurteilung der Eigenschaften der Pigmentzubereitungen auf dem Pulverlacksektor wurden die Pigmentpräparationen in ein Polyester/TGIC-Bindemittelsystem eingearbeitet, Zunächst wurden dazu die verschiedenen Bestandteile des Pulverlacks, d.h. PE/TGIC Crylcoat, Verlaufmittel, Entgasungsmittel, Füllstoffe und die erfindungsgemäße Pigmentpräparation in einem schnelllaufenden Mischer (z.B. Mixaco Container Mixer LAB CM) 180 sec lang gemischt. Anschließend wurde visuell der Grad der An- und Verbackungen, sowie der Aufwand für die Reinigung des Mischers beurteilt.

Die Beurteilung der koloristischen Eigenschaften der Pigmentzubereitungen erfolgte in einem Alkylmelaminharzlack (AM 5) bzw. nach Einarbeitung in ein Polyester/TGIC-Bindemittelsystem, Dispergierung der Mischung in einem Kneter, Vermahlung des Extrudates, Sichtung durch Sieben, Versprühen der Pulverlackmischung auf ein Substrat und Bildung eines einheitlichen Lackfilmes durch thermische Vemetzung bei 200°C.

Die Bestimmung der Teilchengrößenverteilungen (Primärpartikel) der Produkte erfolgte durch visuelle Analyse von transmissionselektronenmikroskopischen Aufnahmen der entsprechenden Probe.

Die Teilchengrößenverteilungen der verwendeten anorganischen Stoffe wurden der Produktbeschreibung des jeweiligen Herstellers entnommen.

In den nachfolgenden Beispielen bedeuten Teile jeweils Gewichtsteile und Prozente jeweils Gewichtsprozente. "min" sind Minuten.

### Beispiel 1a

3600 Teile wässrige Finishsuspension, welche ca. 273 Teile C.I. Pigment Rot 170 enthält, werden mit 67,5 Teilen synthetischem Bariumsulfat (®Blanc-Fixe HD 80 der Fa. Solvay Soda GmbH, Rheinberg) - mit einem mittleren Teilchendurchmesser (d_{50%}) von 1 µm - versetzt, die Suspension 10 min gerührt und anschließend mit 33 %iger Natronlauge auf pH > 11.0 gestellt. Das leuchtend rote Produkt wird filtriert, mit Wasser gewaschen, bei 100°C im Umluftschrank getrocknet und schließlich mit einer Labormühle unter Kühlung gemahlen. Man erhält ca. 340 Teile einer Pigmentpräparation, die im AM 5-Lack transparente, farbstarke und sehr reine Lackierungen liefert. Die Bestimmung der Primärteilchengrößenverteilung ergibt eine mittlere Teilchengröße (d_{50%}) von 0,235 µm.

### Beispiel 1b

61,83 Teile ®Crylcoat 2988 (Carboxyliertes Polyesterharz), 4,65 Teile ®Araldit PT 810 (TGIC-Härter), 3,32 Teile ®Additol XL 496 (Verlaufmittel), 0,20 Teile Benzoin (Entgasungsmittel), 20,00 Teile Blanc Fixe N (BaSO₄), 5,00 Teile Titandioxid Kronos 2310 (Füllstoff) und 5,00 Teile Pigmentzubereitung, hergestellt gemäß Beispiel 1a, werden in ein Gefäß eingewogen und anschließend in einen Laborschnellmischer eingefüllt. Anschließend wird 3 min bei 2000 U/min ohne Kühlung gemischt. Die Sichtprüfung nach dem Entleeren des Mischers ergibt, dass an der Gefäßwand und am Mischflügel kaum Anbackungen feststellbar sind. Die Reinigung des Mischers erfolgt einfach und schnell.

### Beispiel 2 (Vergleichsbeispiel)

Man verfährt wie in Beispiel 1b, außer dass als Farbmittel anstelle der unter Beispiel 1a beschriebenen Pigmentpräparation 5,00 Teile handelsübliches C. I. Pigment Rot 170 eingesetzt werden. Nach dem Mischen ergibt die Sichtprüfung, dass an den Wänden des Mischers und am Mischflügel selbst starke Anbackungen und Verklebungen feststellbar sind. Die Reinigung des Laborschnellmischers ist aufwendig und zeitintensiv.

### Beispiel 3a (Vergleichsbeispiel)

Eine Mischung aus 1500 Teilen Wasser und 80 Teilen 80 %iger Essigsäure wird mit Eis auf 10°C gekühlt und mit einer salzsauren Lösung von 126,4 Teilen 4-Carbamoylbenzoldiazonium Hydrochlorid und geringen Mengen Natriumnitrit versetzt. Der Nitritüberschuss wird mit Amidosulfonsäure entfernt. Anschließend lässt man innerhalb von 120 min eine geklärte Lösung aus 244,4 Teilen 3-Hydroxy-N-(2'-ethoxyphenyl)naphtoesäure-2-amid und 156,4 Teilen einer 33 %igen Natronlauge in 1500 Teilen Wasser zutropfen. Nach dem Auskuppeln lässt man 30 min nachrühren, justiert dann den pH-Wert mit 173 Teilen 31 %iger Salzsäure und erhitzt die Reaktionsmischung mit Dampf auf 98°C. Nach 4 h bei dieser Temperatur kühlt man mit Wasser auf 70°C ab, versetzt mit 204 Teilen 33 %iger Natronlauge, rührt weitere 5 min nach und filtriert den leuchtend roten Feststoff ab. Der Filterkuchen wird sorgfältig mit Wasser gewaschen, bei 120°C im Umluftschrank getrocknet und mit einer Luftstrahlmühle gemahlen.

### Beispiel 3b (Vergleichsbeispiel)

1410 Teile des so hergestellten Pigmentes werden mit 340 Teilen synthetischem Bariumsulfat einer mittleren Teilchengröße (d_{50 %}) von 1,0 µm (Blanc Fixe HD 80 der Fa. Solvay Soda GmbH, Rheinberg) mechanisch gemischt.
Die erhaltene Pigmentpräparation wird gemäß Beispiel 1 b in eine Pulverlackmischung eingearbeitet. Die Sichtprüfung ergibt, dass sich im Vergleich zu Beispiel 1 b stärkere Anbackungen gebildet haben.

### Beispiel 4

Zu einer acetatgepufferten Lösung von 0,6 mol 4-Carbamoylbenzoldiazonium Hydrochlorid in Wasser werden unter Rühren 0,29 mol synthetisches Bariumsulfat (Blanc-Fixe HD 80 von Solvay) - mit einem mittleren Teilchendurchmesser (d_{50 %}) von 1 µm - gegeben.
Anschließend lässt man innerhalb von 130 min eine geklärte alkalisch-wässrige Lösung von 0,65 mol 3-Hydroxy-N-(2'-ethoxyphenyl)naphtoesäure-2-amid zulaufen. Nach dem Auskuppeln wird noch 15 min nachgerührt. Die Reaktionssuspension wird filtriert und mit Wasser gewaschen.
Der erhaltene intensiv rote Presskuchen wird mit Wasser angerührt und auf ein Volumen von 3600 ml aufgefüllt. Die Suspension wird mit Essigsäure auf einen pH-Wert von 3,8 gestellt und eine Stunde bei 102°C gerührt. Nach dem Abkühlen auf Raumtemperatur werden 30 ml 33 %ige Natronlauge zugesetzt, 30 min nachgerührt und das rote Produkt abfiltriert. Der Presskuchen wird mit Wasser gewaschen, bei 100°C im Umluftschrank getrocknet und schließlich mit einer Labormühle unter Kühlung gemahlen. Man erhält 340 g Pigmentpräparation, die im AM 5-Lack transparente, farbstarke und sehr reine Lackierungen liefert.

### Beispiel 5

1421 Teile ungefinishter wasserfeuchter Presskuchen, der 270 Teile C.I. Pigment Rot 170 crude enthält, werden mit Wasser auf ein Volumen von 5000 ml verdünnt und die Suspension unter Rühren mit 50 %iger Essigsäure auf einen pH-Wert von 3,8 eingestellt. Anschließend werden 76,5 Teile synthetisches Bariumsulfat (Blanc-Fixe HD 80 der Fa. Solvay Soda GmbH, Rheinberg) - mit einem mittleren Teilchendurchmesser (d_{50 %}) von 1 µm - zugesetzt, 10 min unter Rühren homogenisiert und dann mit Niederdruckdampf auf 98°C erhitzt. Nach 2 h wird ein Drittel der Suspension entnommen, mit Wasser auf 70°C abgekühlt und mit 33 %iger Natronlauge auf einen pH-Wert > 10 gestellt. Es wird 10 min nachgerührt, das leuchtend rote Produkt abfiltriert, mit Wasser gewaschen, bei 100°C im Umluftschrank getrocknet schließlich mit einer Labormühle unter Kühlung gemahlen. Man erhält 80 g einer Pigmentpräparation, die im AM 5-Lack transparente, farbstarke und sehr reine Lackierungen liefert.

### Beispiel 6a

1385 Teile ungefinishter wasserfeuchter Presskuchen, welcher 270 Teile C.I. Pigment Rot 170 crude enthält, werden mit Wasser auf eine Feststoffkonzentration von etwa 7 % verdünnt und die Suspension unter Rühren mit 80 %iger Essigsäure auf einen pH-Wert von 3,8 eingestellt. Anschließend wird die wässrige Pigmentsuspension unter Rühren auf 105°C erhitzt und eine Stunde bei dieser Temperatur gehalten. Nach dem Abkühlen wird die Suspension mit 67,5 Teilen synthetischem Bariumsulfat mit einem mittleren Teilchendurchmesser von 0,7 µm (Blanc Fixe Micro der Fa. Sachtleben Chemie, Duisburg) versetzt und 10 min unter Rühren homogenisiert. Der pH-Wert wird durch Zugabe von 33 %iger Natronlauge auf einen Wert oberhalb von 10 gestellt, weitere 30 min gerührt und schließlich abfiltriert. Der leuchtend rote Filterrückstand wird sorgfältig mit Wasser gewaschen, im Umluftschrank bei 100°C getrocknet und abschließend mit einer Luftstrahlmühle gemahlen. Man erhält eine Pigmentpräparation, die im AM 5-Lack transparente, farbstarke und sehr reine Lackierungen liefert. Die Bestimmung der Primärteilchengrößenverteilung ergibt eine mittlere Teilchengröße (d_{50 %}) von 0,230 µm.

### Beispiel 6b

61,83 Teile Crylcoat 2988 (Carboxyliertes Polyesterharz), 4,65 Teile Araldit PT 810 (TGIC-Härter), 3,32 Teile Additol XL 496 (Verlaufmittel), 0,20 Teile Benzoin (Entgasungsmittel), 20,00 Teile Blanc Fixe N (Füllstoff), 5,00 Teile Titandioxid Kronos 2310 (Füllstoff) und 5,00 Teile Pigmentzubereitung, hergestellt gemäß Beispiel 6a, werden in ein Gefäß eingewogen und anschließend in einen Mixaco Container Mixer LAB CM 3-D eingefüllt. Anschließend wird 3 min bei 2000 U/min (Dispersionsflügel) bzw. 330 U/min (Mischflügel) ohne Kühlung gemischt. Die Sichtprüfung nach dem Entleeren des Mixaco-Mischers ergibt, dass an der Containerwand (Mischgefäß), am Mischflügel und am Dispersionsflügel kaum Anbackungen feststellbar sind. Die Reinigung des Mischers erfolgt einfach und schnell. Im Vergleich zu einer Mischung, die mit handelsüblichem C.I. Pigment Rot 170 hergestellt wurde, haben sich bedeutend geringere Anbackungen gebildet.

### Beispiel 7a (Vergleichsbeispiel)

Man verfährt wie in Beispiel 6a, außer dass anstelle von Bariumsulfat 67,5 Teile Clay ASP-Ultrafine (Chemie-Mineralien GmbH & Co. KG, Bremen) mit einem mittleren Teilchendurchmesser (d_{50 %}) von 0,2 µm eingesetzt werden. Die Bestimmung der Primärteilchengrößenverteilung ergibt eine mittlere Teilchengröße (d_{50 %}) von 0,262 µm.

### Beispiel 7b

Die aus Beispiel 7a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

### Beispiel 8a (Vergleichsbeispiel)

Man verfährt wie in Beispiel 6a, außer dass anstelle von Bariumsulfat 67,5 Teile Kreide mit einem mittleren Teilchendurchmesser von 2,7 µm (Millicarb-OG der Fa. Omya GmbH, Köln) eingesetzt werden. Die Bestimmung der Primärteilchengrößenverteilung ergibt eine mittlere Teilchengröße (d_{50 %}) von 0,251 µm.

### Beispiel 8b (Vergleichsbeispiel)

Die aus Beispiel 8a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

### Beispiel 9a

Man verfährt wie in Beispiel 6a, außer dass anstelle von synthetischem Bariumsulfat mit einem mittleren Teilchendurchmesser von 0,7 µm (Blanc Fixe Micro der Fa. Sachtleben Chemie, Duisburg) 67,5 Teile Schwerspat mit einem mittleren Teilchendurchmesser von 1,0 µm (Albawhite der Fa. Sachtleben Chemie, Duisburg) eingesetzt werden. Man erhält eine Pigmentpräparation; die im AM 5-Lack transparente, farbstarke und sehr reine Lackierungen liefert. Die Bestimmung der Primärteilchengrößenverteilung ergibt eine mittlere Teilchengröße (d_{50 %}) von 0,246 µm.

### Beispiel 9b

Die aus Beispiel 9a erhaltene Pigmentpräparation wird gemäß Beispiel 6b in eine Pulvertackmischung eingearbeitet. Die Sichtprüfung nach dem Entleeren des Mixaco-Mischers ergibt, dass an der Containerwand (Mischgefäß), am Mischflügel und am Dispersionsflügel nur geringfügige Anbackungen festzustellen sind.

### Beispiel 10a (Vergleichsbeispiel)

Man verfährt wie in Beispiel 6a, außer dass anstelle von Bariumsulfat 67,5 Teile Glimmer mit einem mittleren Teilchendurchmesser von < 2,0 µm (Mica SFG70 der Fa. Aspanger Bergbau und Mineralwerke GmbH, Aspang, Österreich) eingesetzt werden. Die Bestimmung der Primärteilchengrößenverteilung ergibt eine mittlere Teilchengröße (d_{50 %}) von 0,240 µm.

### Beispiel 10b (Vergleichsbeispiel)

Die aus Beispiel 10a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

### Beispiel 11a (Vergleichsbeispiel)

Man verfährt wie in Beispiel 6a, außer dass anstelle von Bariumsulfat 67,5 Teile Talk mit einem mittleren Teilchendurchmesser von 4,5 µm (Finntalc M 15 der Fa. Omya GmbH, Köln) eingesetzt werden. Die Bestimmung der Primärteilchengrößenverteilung ergibt eine mittlere Teilchengröße (d_{50 %}) von 0,268 µm.

### Beispiel 11b (Vergleichsbeispiel)

Die aus Beispiel 11a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

### Beispiel 12a (Vergleichsbeispiel)

Man verfährt wie in Beispiel 6a, außer dass anstelle von Bariumsulfat 67,5 Teile Marmor mit einem mittleren Teilchendurchmesser von 0.9 µm (Calcigloss-GU der Fa. Omya GmbH, Köln) eingesetzt werden. Die Bestimmung der Primärteilchengrößenverteilung ergibt eine mittlere Teilchengröße (d_{50 %}) von 0,250 µm.

### Beispiel 12b (Vergleichsbeispiel)

Die aus Beispiel 12a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

### Beispiel 13a (Vergleichsbeispiel)

Man verfährt wie in Beispiel 6a, außer dass anstelle von Bariumsulfat 67,5 Teile Talk mit einem mittleren Teilchendurchmesser von 1,1 µm (Talk A-3 der Fa. Naintsch Mineralwerke.GmbH, Graz, Österreich) eingesetzt werden.

### Beispiel 13b (Vergleichsbeispiel)

Die aus Beispiel 13a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

### Beispiel 14a (Vergleichsbeispiel)

Man verfährt wie in Beispiel 6a, außer dass anstelle von Bariumsulfat 67,5 Teile Dolomit mit einem mittleren Teilchendurchmesser von 2,5 µm (Microdul Super der Fa. Omya GmbH, Köln) eingesetzt werden. Die Bestimmung der Primärteilchengrößenverteilung ergibt eine mittlere Teilchengröße (d_{50 %}) von 0,229 µm.

### Beispiel 14b (Vergleichsbeispiel)

Die aus Beispiel 14a erhaltene Pigmentpräparation wird gemäß Beispiel 6b in eine Pulverlackmischung eingearbeitet. Die Sichtprüfung nach dem Entleeren des Mixaco-Mischers ergibt, dass an der Containerwand (Mischgefäß), am Mischflügel und am Dispersionsflügel deutlich mehr Anbackungen festzustellen sind, als bei der Verwendung der Pigmentpräparation aus Beispiel 6a.

## Patentansprüche

1. Pulverförmige Farbmittelzusammensetzung, bestehend im wesentlichen aus C.I. Pigment Rot 170 (C.I. No. 12475) und Bariumsulfat, welches vor oder während des Herstellungsprozesses von C.I. Pigment Rot 170 zugegeben wurde.

2. Farbmittelzusammensetzung nach Anspruch 1, bestehend im wesentlichen aus 60 bis 99 Gew.-% C.I. Pigment Rot 170 und 1 bis 40 Gew.-% Bariumsulfat.

3. Farbmittelzusammensetzung nach Anspruch 1 oder 2, **gekennzeichnet durch** eine Teilchengrößenverteilung (D_{50%}) zwischen 0,1 µm und 1,5 µm.

4. Verfahren zur Herstellung einer Farbmittelzusammensetzung nach einem oder mehreren der Ansprüche 1 bis 3, **dadurch gekennzeichnet, dass** Bariumsulfat vor oder während des Herstellungsprozesses von C.I. Pigment Rot 170 zugesetzt und die Mischung homogenisiert wird.

5. Verfahren nach Anspruch 4, **dadurch gekennzeichnet, dass** das Bariumsulfat während der Synthese von C.I. Pigment Rot 170, und/oder unmittelbar vor, während und/oder unmittelbar nach einem Finish von C.I. Pigment Rot 170 - Rohpigment zugegeben wird.

6. Verfahren nach Anspruch 4 oder 5, **dadurch gekennzeichnet, dass** das Bariumsulfat unmittelbar nach dem Finish, aber vor einem Trocknungsschritt zugegeben wird.

7. Verfahren nach einem oder mehreren der Ansprüche 4 bis 6, **dadurch gekennzeichnet, dass** Bariumsulfat mit einer Teilchengrößenverteilung (d_{50%}) zwischen 0,1 µm und 10 µm zugegeben wird.

8. Verwendung einer Farbmittelzusammensetzung nach einem oder mehreren der Ansprüche 1 bis 3, als Farbmittel für Pulverlacke und elektrophotographische Toner.

9. Pulverlack-Zubereitung, enthaltend eine Farbmitteizusammensetzung gemäß Anspruch 1,2 oder 3, sowie ein übliches Bindemittel.

10. Pulverlack-Zubereitung nach Anspruch 9, bestehend im wesentlichen aus 0,1 bis 30 Gew.-% der Farbmittelzusammensetzung, 45 bis 80 Gew.-% eines Bindemittels (Härter mit eingerechnet) aus der Gruppe der Epoxidharze, Polyesterharze, Polyurethanharze, Acrylatharze oder einer Kombination dieser Harze, sowie 0 bis 50 Gew.% weiterer Zusatzstoffe, wie z.B. Farbmittel zum Nuancieren, Tenside, Füllmittel, Ladungssteuermittel zur kontrollierten Einstellung der elektrostatischen Aufladung, Dispergiermittel, Stellmittel, Wachse, Entschäumer, Antistaubmittel, Extender, Konservierungsmittel, Additive zur Steuerung der Rheologie, Netzmittel, Anitoxidantien, UV-Absorber, Lichtstabilisatoren, Antistatika, Gleitmittel oder Entgasungsmittel.

11. Verfahren zur Herstellung einer Pulverlack-Zubereitung nach Anspruch 9 oder 10, **dadurch gekennzeichnet, dass** die Farbmittelzusammensetzung, das Bindemittel und gegebenenfalls die Zusatzstoffe gemischt werden, die Mischung extrudiert und das Extrudat abgekühlt und gemahlen wird.

## Claims

1. A powderous colorant composition consisting essentially of C.I. Pigment Red 170 (C.I. No. 12475) and barium sulfate, the latter having been added before or during the operation of preparing C.I. Pigment Red 170.

2. A colorant composition as claimed in claim 1, consisting essentially of from 60% to 99% by weight of C.I. Pigment Red 170 and from 1% to 40% by weight of barium sulfate.

3. A colorant composition as claimed in claim 1 or 2, **characterized by** a particle size distribution (D_{50%}) of between 0.1 µm and 1.5 µm.

4. A process for preparing a colorant composition as claimed in one or more of claims 1 to 3, which comprises adding barium sulfate before or during the operation of preparing C.I. Pigment Red 170, and homogenizing the mixture.

5. The process as claimed in claim 4, wherein the barium sulfate is added during the synthesis of C.I. Pigment Red 170 and/or immediately before, during and/or immediately after a finish of C.I. Pigment Red 170 crude pigment.

6. The process as claimed in claim 4 or 5, wherein the barium sulfate is added immediately after the finish but before a drying step.

7. The process as claimed in one or more of claims 4 to 6, wherein barium sulfate having a particle size distribution (d_{50%}) of between 0.1 µm and 10 µm is added.

8. The use of a colorant composition as claimed in one or more of claims 1 to 3 as a colorant for powder coating materials and electrophotographic toners.

9. A powder coating formulation comprising a colorant composition as claimed in claim 1, 2 or 3 and also a customary binder.

10. A powder coating formulation as claimed in claim 9, consisting essentially of from 0.1 % to 30% by weight of the colorant composition, from 45% to 80% by weight of a binder (including curing agent) from the group of epoxy resins, polyester resins, polyurethane resins, acrylate resins, and a combination of these resins, and from 0% to 50% by weight of further additives, such as shading dyes, surfactants, fillers, charge control agents for controlled setting of the electrostatic charge, dispersants, standardizers, waxes, defoamers, antidust agents, extenders, preservatives, rheology control additives, wetting agents, antioxidants, UV absorbers, light stabilizers, antistats, lubricants or devolatilizers.

11. A process for preparing a powder coating formulation as claimed in claim 9 or 10, which comprises mixing the colorant composition, the binder, and, where appropriate, the additives, extruding the mixture, and cooling and grinding the extrudate.

## Revendications

1. Composition pulvérulente de produit colorant, constituée essentiellement de pigment rouge C.I. 170 (n° C.I. 12475) et de sulfate de baryum qui a été ajouté avant ou pendant le processus de préparation du pigment rouge C.I. 170.

2. Composition de produit colorant selon la revendication 1, constituée essentiellement de 60 à 99 % en poids de pigment rouge C.I. 170 et 1 à 40 % en poids de sulfate de baryum.

3. Composition de produit colorant selon la revendication 1 ou 2, **caractérisée par** une distribution granulométrique (D_{50 %}) comprise entre 0,1 µm et 1,5 µm.

4. Procédé pour la préparation d'une composition de produit colorant selon une ou plusieurs des revendications 1 à 3, **caractérisé en ce que** le sulfate de baryum est ajouté avant ou pendant le processus de préparation du pigment rouge C.I. 170 et le mélange est homogénéisé.

5. Procédé selon la revendication 4, **caractérisé en ce que** le sulfate de baryum est ajouté pendant la synthèse du pigment rouge C.I. 170 et/ou immédiatement avant, pendant et/ou immédiatement après un traitement final du pigment brut du pigment rouge C.I. 170.

6. Procédé selon la revendication 4 ou 5, **caractérisé en ce que** le sulfate de baryum est ajouté immédiatement après le traitement final, mais avant une étape de séchage.

7. Procédé selon une ou plusieurs des revendications 4 à 6, **caractérisé en ce qu'**on ajoute du sulfate de baryum ayant une distribution granulométrique (d_{50 %}) comprise entre 0,1 µm et 10 µm.

8. Utilisation d'une composition de produit colorant selon une ou plusieurs des revendications 1 à 3, en tant que produit colorant pour peintures en poudre et toners électrophotographiques.

9. Préparation de peinture en poudre contenant une composition de produit colorant selon la revendication 1, 2 ou 3, ainsi qu'un liant usuel.

10. Préparation de peinture en poudre selon la revendication 9, essentiellement constituée de 0,1 à 30 % en poids de la composition de produit colorant, 45 à 80 % en poids d'un liant (durcisseur compris) choisi dans le groupe des résines époxy, résines polyester, résines polyuréthanne, résines acrylate ou d'une association de ces résines, ainsi que de 0 à 50 % en poids d'autres additifs, comme par exemple des colorants pour le nuançage, des tensioactifs, des charges, des agents de réglage de charge pour l'ajustement réglé de la charge électrostatique, des dispersants, des fixateurs, des cires, des antimousses, des agents anti-poussière, des diluants, des conservateurs, des additifs pour le réglage de la rhéologie, des agents mouillants, des antioxydants, des absorbeurs UV, des photostabilisants, des agents antistatiques, des lubrifiants ou des agents de dégazage.

11. Procédé pour la production d'une préparation de peinture en poudre selon la revendication 9 ou 10, **caractérisé en ce que** la composition de produit colorant, le liant et éventuellement les additifs sont mélangés, le mélange est extrudé et l'extrudat est refroidi, puis broyé.
